# FASCICULE DE BREVET EUROPEEN

(11) **EP 1 362 449 B1**
(45) Date de publication et mention de la délivrance du brevet: **25.09.2013**
(21) Numéro de dépôt: 02704848.7
(22) Date de dépôt: 15.02.2002
(51) Int. Cl.: H04L 1/18

(54) **PROCEDE DE TRANSMISSION DE DONNEES AVEC UN NIVEAU DE PROTECTION CONTRE LES ERREURS SELECTIONNE PARMI PLUSIEURS NIVEAUX PREDEFINIS**
VERFAHREN ZUR DATENÜBERTRAGUNG MIT EINEM FEHLERSCHUTZNIVEAU, DAS UNTER MEHREREN VERSCHIEDENEN VORBESTIMMTEN NIVEAUS AUSGEWÄHLT IST
DATA TRANSMISSION METHOD WITH A LEVEL OF ERROR PROTECTION SELECTED FROM AMONG SEVERAL PRE-DEFINED LEVELS

(30) Priorité: 23.02.2001 FR 0102496
(43) Date de publication de la demande: 19.11.2003
(73) Titulaire: Kapsch CarrierCom France S.A.S., 78066 St Quentin Yvelines Cedex (FR)
(72) Inventeur: CAYLA, Stéphane, F-78220 Viroflay (FR)
(74) Mandataire: Weiser, Andreas
(86) Numéro de dépôt international: PCT/FR2002/000592
(87) Numéro de publication internationale: WO 2002/069548

(56) Documents cités:
- EP-A- 0 735 774
- WANG S ET AL: "AN ERROR CONTROL DESIGN FOR MULTIMEDIA WIRELESS NETWORKS" VTC 2000 IEEE 51ST. VEHICULAR TECHNOLOGY CONFERENCE PROCEEDINGS, NEW YORK, NY, IEEE, US, vol. 2 OF 3. CONF. 51, 15 mai 2000 (2000-05-15), pages 795-799, XP000967979 ISBN: 0-7803-5719-1
- LIU C-C ET AL: "PROVIDING UNEQUAL RELIABILITY FOR TRANSMITTING LAYERED VIDEO STREAMS OVER WIRELESS NETWORKS BY MULTI-ARQ SCHEMES" PROCEEDINGS 1999 INTERNATIONAL CONFERENCE ON IMAGE PROCESSING. IEEE, NEW YORK, US, vol. 3 OF 4, 24 octobre 1999 (1999-10-24), pages 100-104, XP000921563 ISBN: 0-7803-5468-0
- ZHANG T ET AL: "UNEQUAL PACKET LOSS PROTECTION FOR LAYERED VIDEO TRANSMISSION" IEEE TRANSACTIONS ON BROADCASTING, IEEE INC. NEW YORK, US, vol. 45, no. 2, juin 1999 (1999-06), pages 243-252, XP000851913 ISSN: 0018-9316

## Description

La présente invention concerne les techniques de transmission de paquets en mode acquitté depuis une unité de contrôle maître vers un terminal esclave.

L'invention concerne plus particulièrement, parmi ces techniques, celles dans lesquelles l'unité de contrôle, qui produit une séquence de blocs comportant chacun un en-tête en plus des données d'utilisateur, utilise un mécanisme de « polling » pour requérir des acquittements de paquets de la part du terminal distant. L'en-tête de chaque bloc comporte alors un champ de contrôle d'acquittement activé de façon intermittente par l'unité de contrôle pour requérir un acquittement de blocs de la part du terminal. En réponse à une telle requête, le terminal retourne un message dans lequel un certain nombre de blocs précédents sont acquittés, positivement et/ou négativement.

Une technique de ce genre est utilisée, en particulier, pour les liaisons descendantes (du réseau vers les terminaux mobiles) dans les réseaux GPRS (« General Packet Radio Service ») qui ont été développés pour permettre la transmission de données en mode paquets dans des réseaux cellulaires de type GSM (« Global System for Mobile communications »).

Le mécanisme d'acquittement des paquets peut être perturbé lorsqu'un bloc dont l'en-tête a un champ de contrôle d'acquittement activé est mal reçu par le terminal esclave. Dans ce cas, le terminal n'exécute pas la requête d'acquittement, de sorte que l'unité de contrôle reste dans l'incertitude quant aux blocs qui ont été correctement reçus.

Souvent, le mécanisme d'acquittement est utilisé dans le cadre d'un protocole de répétition automatique (ARQ, « Automatic Repeat reQuest ») dans lequel l'unité émettrice des paquets utilise une fenêtre d'émission de longueur déterminée, positionnée à partir du premier bloc qui n'a pas encore été acquitté positivement. Si un message de requête d'acquittement n'a pas été correctement reçu par le terminal distant, la fenêtre d'émission peut rester bloquée à une position ancienne, ce qui conduit à des répétitions inutiles de paquets déjà reçus et à des retards significatifs dans la transmission des nouveaux paquets.

L'article de Wang S. et al. « van Error Control Design for Multimedia Wireless Networks », publié dans « Vehicular Technology Conférence Proceedings », vol. 2 de 3, Conf. 51, 15.5.2000, pages 759-799 décrit un schéma de contrôle d'erreurs dans un système de transmissions vidéo, qui est basé sur le schéma SR-ARQ. Le schéma utilise les propriétés de couche des trames MPEG en respectant les conditions de qualité requises, qui différent selon les sections de données dans le signal vidéo. Le schéma de Wang utilise trois classes de service : une classe 1, qui fonctionne comme le schéma SR-ARQ conventionnel, une classe 2 dans laquelle le nombre de retransmissions des paquets de données est limité et une classe 3 dans laquelle les paquets de données ne sont transmis qu'une seule fois.

La demande de brevet EP 735 774 décrit un système de transmission d'images JPEG. L'information image JPEG est séparé en deux types : information Type I et information Type II. L'information Type I est pourvue d'une protection contre les erreurs qui est plus puissante que celle pourvue pour l'information Type II.

L'article de Liu C-C et al. « Providing Unequal Reliability for Transmitting Layered Video Streams over Wireless Networks by Multi-ARQ Schemes" , publié dans "International Conference on Image Processing", vol. 3 de 4, 24.10.1999, pages 100-104, décrit un système de transmission vidéo du type Multi-ARQ. Dans ce système, le schéma ARQ est utilisé pour les parties de données vidéo qui sont les plus sensibles.

L'article de Zhang et al. "Unequal Packet Loss Protection for Layered Video Transmission" publié dans "IEEE Transactions on Broadcasting", vol. 45, no 2, juin 1999, pages 243-252, décrit un système de transmission vidéo dans lequel le signal vidéo est représenté en différentes couches. La protection contre les erreurs appliquée diffère selon la couche.

L'objectif de la présente invention est de rendre le choix de la protection contre les erreurs indépendant du signal à transmettre.

Un but de la présente invention est de proposer un procédé efficace de transmission de données en mode paquets.

Un autre but est de réduire les risques de blocage des fenêtres d'émission utilisées dans certains mécanismes ARQ.

L'invention proprose ainsi un procédé de transmission de données en mode acquitté entre une unité de contrôle et un terminal, dans lequel l'unité de contrôle produit une séquence dé blocs comportant chacun un en-tête et des données à transmettre, et les blocs sont transmis à destination du terminal, chaque bloc étant transmis avec un niveau de protection contre les erreurs sélectionné parmi plusieurs niveaux prédéfinis, le niveau sélectionné étant indiqué dans une information de signalisation accompagnant le bloc transmis. L'en-tête de chaque bloc comporte un champ de contrée d'acquittement activé de façon intermittente par l'unité de contrôle pour requérir un acquittement de blocs de la part du terminal. Selon invention, on sélectionne un niveau de protection plus élevé pour la transmission d'au moins un bloc dont l'en-téte a un champ de contrôle d'acquittement activé que pour la transmission des blocs dont le champ de contrôle d'acquittement de lien-tête n'est pas activé.

Le procédé utilise une protection différenciée des blocs transmis, selon qu'ils contiennent ou non une requête d'acquittement. La meilleure protection des requêtes d'acquittement, qui sont transmises dans la bande avec les données d'utilisateur, permet d'éviter une grande partie des blocages que risquent d'entrainer les mécanismes d'acquittement.

Le plus souvent, la protection contre les erreurs de transmission est assurée par un codeur de canal utilisant un code convolutif ou un code en blocs. Des niveaux de protection différents sont alors réalisés en ajustant le rendement de codage : introduction de symboles de redondance supplémentaires, modification de la structure du code utilisé, réglage du degré de poinçonnage du code, etc.

D'autres méthodes peuvent être utilisées pour adapter le niveau de protection contre les erreurs, par exemple des méthodes de contrôle adaptatif de la puissance d'émission des signaux.

Un autre aspect de la présente invention se rapporte à une unité de

contrôle de paquets, comprenant des moyens de production d'au moins une séquence de blocs comportant chacun des données à transmettre et un en-tête incluant un champ de contrôle d'acquittement, des moyens pour transmettre les blocs de la séquence vers un terminal, des moyens de sélection d'un niveau de protection contre les erreurs pour la transmission de chaque bloc de la séquence, parmi plusieurs niveaux prédéfinis, et des moyens d'activation intermittente du champ de contrôle d'acquittement dans l'en-tête des blocs de la séquence pour requérir un acquittement de blocs de la part du terminal vers lequel le bloc est transmis. Les moyens de sélection sont agencés pour sélectionner un niveau de protection plus élevé pour la transmission d'au moins un bloc dont l'en-tête a un champ de contrôle d'acquittement activé que pour la transmission des blocs dont le champ de contrôle d'acquittement de l'en-tête n'est pas activé.

D'autres particularités et avantages de la présente invention apparaîtront dans la description ci-après d'exemples de réalisation non limitatifs, en référence aux dessins annexés, dans lesquels :
- la figure 1 est un schéma d'un réseau de type GPRS auquel l'invention peut s'appliquer ;
- la figure 2 est un schéma synoptique d'une unité de contrôle de paquets d'un tel réseau, adaptée à la mise en oeuvre de l'invention.

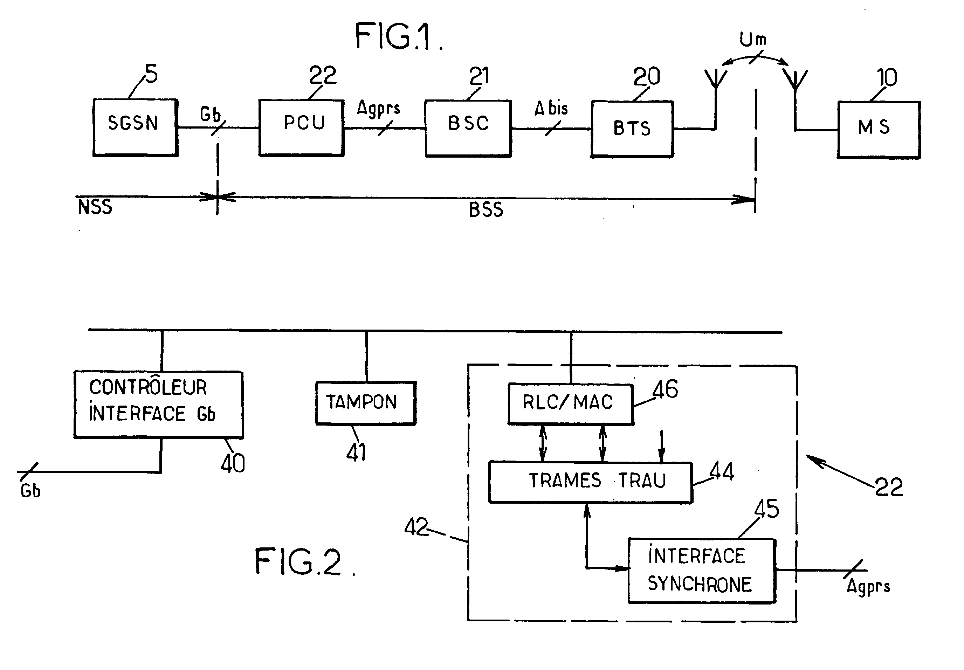

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système des stations de base ou BSS (« Base Station Subsystem »).

Pour le service de paquets, les commutateurs du NSS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux extérieurs de transmission de paquets, tels que par exemple le réseau Internet.

Une description générale de l'interface radio, appelée Um, entre les stations mobiles (MS) 10 et les stations de base (BTS) 20 du BSS est fournie dans la spécification technique ETSI TS 101 350, « Digital cellular telecommunications system (Phase 2+) ; General Packet Radio Service (GPRS) ; Overall description of the GPRS radio interface ; Stage 2 (GSM 03.64, version 6.3.0, Release 1997), publiée par l'ETSI (European Telecommunications Standards Institute) en juillet 1999.

Chaque station de base 20 est supervisée par un contrôleur de stations de base ou BSC (« Base Station Controller ») 21 par l'intermédiaire d'une interface appelée Abis. Pour gérer la transmission de paquets GPRS, le BSS comprend en outre une entité 22 appelée unité de contrôle de paquets ou PCU (« Packet Control Unit »). La localisation du PCU à l'intérieur du BSS n'est pas normalisée. Dans l'exemple représenté sur la figure 1, le PCU 22 est situé entre le BSC 21, avec lequel il communique à travers une interface appelée Agprs, et le NSS, avec lequel il communique à travers l'interface Gb.

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20 à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et la BTS 20, les informations sont portées par des trames de type TRAU (« Transcoder/Rate Adaptor Unit ») de 320 bits, à raison d'une trame toutes les 20 ms. Ces trames TRAU sont mises en forme et traitées par un module 44 et transmises par l'intermédiaire de circuits d'interface synchrone 45 qui réalisent des sous-voies MIC à 16 kbit/s avec les BTS 20. Plusieurs sous-voies à 16 kbits peuvent être multiplexées sur l'interface Agprs et séparées par le BSC 21 pour l'acheminement vers les BTS. Un module 46 du contrôleur d'interface Agprs 42 met en oeuvre les protocoles radio de la couche 2 du modèle ISO, à savoir les protocoles RLC/MAC (« Radio Link Control / Medium Access Control ») décrits dans la norme européenne ETSI EN 301 349, Digital cellular telecommunications system (Phase 2+) ; General Packet Radio Service (GPRS) ; Mobile Station (MS)-Base Station System (BSS) interface ; Radio Link Control/Medium Access Control (RLC/MAC) protocol (GSM 04.60, version 6.8.1, Release 1997), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

Dans le sens descendant, du PCU vers les MS, l'en-tête MAC de chaque bloc RLC/MAC inclut :
- un champ USF de trois bits (« Uplink State Flag »), servant à indiquer quelle station mobile est autorisée à utiliser une ressource montante correspondant à la ressource descendante sur laquelle est transmise le bloc RLC/MAC ;
- un champ de contrôle d'acquittement de trois bits, incluant un sous-champ d'un bit S/P (« Supplementary/Polling ») indiquant si le champ de contrôle d'acquittement est actif (S/P = 1) ou inactif (S/P = 0) et un sous-champ de deux bits RRBP (« Relative Reserved Block Period ») spécifiant de manière unique un bloc montant dans lequel la station mobile destinataire doit transmettre un message d'acquittement ;
- un champ « Payload Type » de deux bits spécifiant le type de bloc RLC suivant (données, contrôle, ...).

On s'intéresse ici à la transmission de blocs de données RLC. Chacun de ces blocs comporte un en-tête RLC suivant l'octet d'en-tête MAC. Cet en-tête RLC comporte notamment les informations suivantes :
- identité de flux temporaire TFI (« Temporary Flow Identity »), composée de cinq bits identifiant le flux de blocs temporaire (TBF, « Temporary Block Flow ») d'où proviennent les données RLC du bloc. Un TBF est une connexion supportant le transfert unidirectionnel de LLC-PDU sur des canaux physiques de données. Un TBF est temporaire, c'est-à-dire qu'il n'est maintenu que pendant le transfert de données ;
- un numéro de séquence du bloc BSN (« Bloc Sequence Number ») de sept bits, qui contient le numéro de séquence du bloc RLC/MAC, modulo 128.

La sous-couche MAC gère en outre le multiplexage des blocs relevant des différents TBF actifs sur les canaux physiques disponibles, en arbitrant entre les différents utilisateurs mobiles par un mécanisme de planification (« scheduling »).

L'entité RLC/MAC de la station mobile destinataire des blocs de données descendants d'un TBF tient à jour pour ce flux une variable d'état de réception V(R) qui indique le BSN suivant le BSN le plus élevé reçu sur ce TBF. Le nombre V(R)-1 (modulo 128) pointe ainsi sur la fin d'une fenêtre de réception dont la longueur est de k = 64 blocs RLC/MAC. A réception d'une commande de « polling », c'est-à-dire d'un bloc dont l'en-tête MAC a le bit S/P = 1, la MS retourne, dans le bloc montant spécifié par le sous-champ RRBP, un message d'acquittement PDAN (« Packet Downlink Ack/Nack ») qui comporte notamment :
- un champ SSN (« Starting Sequence Number ») de sept bits contenant la variable V(R) courante pour le TBF ; et
- un champ RBB (« Receive Block Bitmap ») de k = 64 bits indiquant ceux des blocs de la fenêtre de réception qui ont été correctement reçus. Un acquittement positif du bloc BSN = (SSN - i) mod 128 est indiqué par la valeur 1 du bit de rang i (1 ≤ i ≤ k) du bitmap RRB, et un acquittement négatif par la valeur 0.

A réception du message PDAN, le PCU met à jour pour le TBF une variable d'état d'acquittement V(A) qui contient le BSN du plus ancien bloc qui n'a pas été acquitté positivement, ainsi qu'un tableau V(B) à k entrées indiquant les états d'acquittement respectifs (acquittement positif / acquittement négatif / acquittement non reçu) de k blocs consécutifs à partir de celui désigné par V(A), ces k blocs consécutifs formant une fenêtre d'émission. Les variables d'état V(A) et V(B) sont directement déduites des champs SSN et RBB reçus dans le dernier message PDAN. Le protocole RLC/MAC n'autorise la transmission de blocs qu'à l'intérieur de la fenêtre d'émission ainsi gérée par le PCU. En dehors de cette fenêtre, la transmission des blocs est inhibée.

Pour ne pas retarder la transmission des nouveaux blocs, il convient d'éviter les phénomènes de blocage de la fenêtre d'émission sur une position obsolète. Un tel blocage peut notamment se produire lorsque des erreurs affectent la transmission des commandes de « polling » envoyées par le PCU. Pour éviter cela, il est proposé d'appliquer une protection spécifique aux blocs de données descendants dont l'en-tête MAC a le bit S/P = 1.

Dans le cas du GPRS, un niveau de protection variable peut être sélectionné bloc par bloc à l'intérieur d'un TBF, par le choix d'un schéma de codage CS (« Coding Scheme ») parmi quatre schémas CS-1 à CS-4 spécifiés dans la norme européenne ETSI EN 300 909, Digital cellular telecommunications system (Phase 2+) ; Channel coding (GSM 05.03, version 6.2.1, Release 1997), publiée par l'ETSI en août 1999.

Le schéma CS-4 n'utilise pas de codage correcteur d'erreurs, c'est-à-dire que le rendement de codage vaut 1 : seule une séquence de vérification de bloc (BCS « Block Check Sequence ») est adjointe aux blocs de données. Les schémas CS-1 à CS-3 utilisent un code convolutif de rendement 1/2 après l'adjonction de la séquence BCS. Aucun poinçonnage n'est effectué dans le schéma CS-1 (qui offre le plus haut niveau de protection), tandis que des poinçonnages sont appliqués dans les schémas CS-2 et CS-3 afin qu'ils donnent lieu à des rendements de codage globaux d'environ 2/3 et d'environ 3/4, respectivement.

Le codage de canal CS-i (1 ≤ i ≤ 4) est appliqué au niveau du protocole de couche physique, c'est-à-dire dans les BTS pour les liaisons descendantes. Chaque bloc RLC/MAC codé se compose de 456 bits et est transmis dans des intervalles de temps correspondants de quatre trames TDMA sur une fréquence porteuse, les trames TDMA successives (« Time-Division Multiple Access ») étant chacune décomposées en huit intervalles de temps pour assurer un multiplexage temporel de canaux.

Un motif de huit bits de signalisation est inséré dans chaque trame codée (deux bits par intervalle de temps) afin d'indiquer notamment quel schéma de codage a été appliqué par l'émetteur.

Ces bits de signalisation sont extraits du bloc codé reçu par le destinataire, pour lui permettre d'identifier le schéma de codage. Le récepteur procède alors au décodage adéquat du bloc qui donnera lieu à un acquittement positif s'il est réussi et si la BCS décodée est cohérente avec le contenu du bloc.

Le schéma de codage appliqué sur la liaison descendante est déterminé de façon connue en soi par le PCU en fonction de mesures de qualité de réception sur le lien radio, selon des mécanismes d'adaptation de lien qui cherchent à atteindre un objectif en termes de taux de blocs erronés afin d'optimiser le débit brut. Le schéma sélectionné est inséré dans la trame TRAU portant le bloc pour être appliqué par la BTS

Chaque fois qu'un schéma de codage autre que CS-1 est déterminé par les mécanismes d'adaptation de lien, la couche RLC/MAC sélectionne un schéma plus robuste aux erreurs pour chaque bloc dont l'en-tête MAC a le bit S/P = 1. En particulier le schéma CS-1 (niveau de protection maximal) peut être retenu de façon systématique pour ces blocs qui contiennent des requêtes d'acquittement.

Il est noter que cette sélection systématique du schéma CS-1 peut ne pas être appliquée lorsque le TBF est en phase de terminaison et que toutes les données RLC de ce TBF ont été envoyées au moins une fois. En effet, la Release 1997 du protocole RLC/MAC du GPRS impose la ré-émission des données dans le même code que la première émission. Par exemple, si uniquement des blocs déjà émis en CS-4 sont à ré-émettre en phase de terminaison du TBF, les répétitions seront aussi codées en CS-4 même si leur en-tête MAC contient S/P = 1. Cependant, certains mécanismes d'adaptation de lien tendent à privilégier un schéma de codage plus robuste en fin de TBF, de sorte que les risques de blocage de fenêtre restent faibles.

## Revendications

1. Procédé de transmission de données en mode acquitté entre une unité de contrôle (22) et un terminal (10), dans lequel l'unité de contrôle produit une séquence de blocs comportant chacun un en-tête et des données à transmettre, et les blocs sont transmis à destination du terminal, chaque bloc étant transmis avec un niveau de protection contre les erreurs sélectionné parmi plusieurs niveaux prédéfinis, le niveau sélectionné étant indiqué dans une information de
signalisation accompagnant le bloc transmis, dans lequel l'en-tête de chaque bloc comporte un champ de contrôle d'acquittement activé par l'unité de contrôle pour requérir un acquittement de blocs de la part du terminal, **caractérisé en ce que**
le champ de contrôle d'acquittement est activé de façon intermittente par l'unité de contrôle; que
*le niveau de protection est sélectionné par le choix d'un schéma de codage et que*
*un niveau de projection plus élevé est sélectionné* pour la transmission d'au moins un bloc dont l'en-tête a un champ de contrôle d'acquittement activé que pour la transmission des blocs dont le champ de contrôle d'acquittement de l'en-tête n'est pas activé.

2. Procédé selon la revendication 1, dans lequel on sélectionne un niveau de protection maximal pour la transmission du bloc dont l'en-tête a un champ de contrôle d'acquittement activé.

3. Procédé selon la revendication 1 ou 2, dans lequel la transmission des blocs à destination du terminal est inhibée en dehors d'une fenêtre composée d'un nombre déterminé de blocs et dont la position dans la séquence est déterminée par l'unité de contrôle (22) sur la base d'informations d'acquittement reçues du terminal (10) en réponse aux blocs dont l'en-tête a un champ de contrôle d'acquittement activé.

4. Procédé selon l'une quelconque des revendications précédentes, dans lequel les niveaux prédéfinis de protection contre les erreurs résultent d'un codage de canal de rendement réglable auquel les blocs sont soumis.

5. Unité de contrôle de paquets, comprenant des moyens (46) de production d'au moins une séquence de blocs comportant chacun des données à transmettre et un en-tête incluant un champ de contrôle d'acquittement, des moyens (44-45) pour transmettre les blocs de la séquence vers un terminal (10), des moyens (46) de sélection d'un niveau de protection contre les erreurs pour la transmission de chaque bloc de la séquence, parmi plusieurs niveaux prédéfinis, et des moyens (46) d'activation du champ de contrôle d'acquittement dans l'en-tête des blocs de la séquence pour requérir un acquittement de blocs de la part du terminal vers lequel le bloc est transmis,
**caractérisé en ce que**
les moyens (46) d'activation du champ de contrôle d'acquittement sont des moyens d'activation intermittente; que
*les moyens de sélection comportent des moyens pour choisir un schéma de codage ; et que*
les moyens de sélection sont agencés pour ëéicctionner un niveau de protection plus élevé pour la transmission d'au moins un bloc dont l'en-tête a un champ de contrôle d'acquittement activé que pour la transmission des blocs dont le champ de contrôle d'acquittement de l'en-tête, n'est pas activé.

6. Unité de contrôle selon la revendication 5, dans lequel les moyens de sélection (46) sont agencés pour sélectionner un niveau de protection maximal pour la transmission du bloc dont l'en-tête a un champ de contrôle d'acquittement activé.

7. Unité de contrôle selon la revendication 5 ou 6, qui comprend en plus des moyens pour inhiber la transmission des blocs vers le terminal (10) en dehors d'une fenêtre composée d'un nombre déterminé de blocs et ayant une position dans la séquence déterminé sur la base d'informations d'acquittement reçues du terminal en réponse aux blocs dont l'en-tête a un champ de contrôle d'acquittement activé.

## Patentansprüche

1. Verfahren zum Übertragen von Daten im Quittierungsmodus zwischen einer Kontrolleinheit (22) und einem Terminal (10), wobei die Kontrolleinheit eine Sequenz von Blöcken jeweils mit einem Header und zu übertragenden Daten erstellt und wobei die Blöcke zum Terminal übertragen werden, wobei jeder Block mit einem Schutzniveau zum Schutz vor Fehlern übertragen wird, das aus mehreren vorbestimmten Niveaus ausgewählt wird, wobei das ausgewählte Niveau in einer den übertragenen Block begleitenden Signalisierungsinformation angegeben wird, wobei der Header eines jeden Blocks ein Quittierungskontrollfeld aufweist, das von der Kontrolleinheit aktiviert wird, um eine Quittierung der Blöcke seitens des Terminals anzufordern, **dadurch gekennzeichnet, dass**
das Quittierungskontrollfeld von der Kontrolleinheit intermittierend aktiviert wird; dass
das Schutzniveau durch die Wahl eines Kodierungsschemas ausgewählt wird und dass
für die Übertragung zumindest eines Blocks, dessen Header ein aktiviertes Quittierungskontrollfeld hat, ein höheres Schutzniveau ausgewählt wird als für die Übertragung von Blöcken, deren Quittierungskontrollfeld des Headers nicht aktiviert ist.

2. Verfahren nach Anspruch 1, wobei ein maximales Schutzniveau für die Übertragung des Blocks ausgewählt wird, dessen Header ein aktiviertes Quittierungskontrollfeld hat.

3. Verfahren nach Anspruch 1 oder 2, wobei die Übertragung der Blöcke zu dem Terminal außerhalb eines Fensters unterbunden wird, das sich aus einer bestimmten Anzahl von Blöcken zusammensetzt und dessen Stellung in der Sequenz von der Kontrolleinheit (22) auf Grundlage von Quittierungsinformationen bestimmt wird, die von dem Terminal (10) in Antwort auf die Blöcke erhalten werden, deren Header ein aktiviertes Quittierungskontrollfeld haben.

4. Verfahren nach einem der vorangehenden Ansprüche, wobei die vorbestimmten Schutzniveaus zum Schutz vor Fehlern aus einer Kanalkodierung mit einstellbarer Kodiereffizienz resultieren, welcher die Blöcke unterliegen.

5. Paketkontrolleinheit, enthaltend Mittel (46) zum Erstellen von zumindest einer Sequenz von Blöcken, die jeweils zu übertragende Daten und einen Header aufweisen, der ein Quittierungskontrollfeld einschließt, Mittel (44 - 45) zum Übertragen der Blöcke der Sequenz zu einem Terminal (10), Mittel (46) zum Auswählen eines Schutzniveaus zum Schutz vor Fehlern bei der Übertragung von jedem Block der Sequenz unter mehreren vorbestimmten Niveaus, und Mittel (46) zum Aktivieren des Quittierungskontrollfelds in dem Header der Blöcke der Sequenz, um eine Quittierung von Blöcken vonseiten des Terminals anzufordern, zu dem der Block übertragen wird, **dadurch gekennzeichnet, dass**
die Mittel (46) zum Aktivieren des Quittierungskontrollfeldes Mittel zur intermittierenden Aktivierung sind; dass die Auswahlmittel Mittel zum Wählen eines Kodierungsschemas aufweisen; und dass
die Auswahlmittel dafür ausgebildet sind, für die Übertragung zumindest eines Blocks, dessen Header ein aktiviertes Quittierungskontrollfeld hat, ein höheres Schutzniveau auszuwählen als für die Übertragung von Blöcken, deren Quittierungskontrollfeld des Headers nicht aktiviert ist.

6. Kontrolleinheit nach Anspruch 5, wobei die Auswahlmittel (46) dafür ausgebildet sind, ein maximales Schutzniveau für die Übertragung des Blocks auszuwählen, dessen Header ein aktiviertes Quittierungskontrollfeld hat.

7. Kontrolleinheit nach Anspruch 5 oder 6, ferner enthaltend Mittel zum Unterbinden der Übertragung von Blöcken zu dem Terminal (10) außerhalb eines Fensters, das aus einer bestimmten Anzahl von Blöcken zusammengesetzt ist und in der Sequenz eine Stellung hat, die auf Grundlage von Quittierungsinformationen bestimmt wird, die von dem Terminal in Antwort auf die Blöcke erhalten werden, deren Header ein aktiviertes Quittierungskontrollfeld hat.

## Claims

1. A method for transmitting data in acknowledged mode between a control unit (22) and a terminal (10), wherein the control unit produces a sequence of blocks each comprising a header and data to be transmitted, and the blocks are transmitted to the terminal, each block being transmitted with a level of protection against errors selected from a number of predefined levels, the selected level being indicated in signalling information accompanying the transmitted block, wherein the header of each block comprises an acknowledgement control field activated by the control unit in order to request an acknowledgement of blocks from the terminal, **characterised in that**
the acknowledgement control field is activated intermittently by the control unit; **in that** the level of protection is selected by the choice of a coding scheme, and **in that**
a higher level of protection is selected for the transmission of at least one block of which the header has an activated acknowledgement control field than for the transmission of blocks of which the acknowledgement control field of the header is not activated.

2. The method according to Claim 1, wherein a maximum level of protection is selected for the transmission of the block of which the header has an activated acknowledgement control field.

3. The method according to Claim 1 or 2, wherein the transmission of the blocks to the terminal is inhibited outside a window composed of a determined number of blocks and of which the position in the sequence is determined by the control unit (22) on the basis of acknowledgement information received from the terminal (10) in response to the blocks of which the header has an activated acknowledgement control field.

4. The method according to one of the preceding claims, wherein the predefined levels of protection against errors result from a channel coding of adjustable yield to which the blocks are subjected.

5. A packet control unit, comprising means (46) for producing at least one sequence of blocks each comprising data to be transmitted and a header including an acknowledgement control field, means (44-45) for transmitting the blocks of the sequence to a terminal (10), means (46) for selecting a level of protection against errors for the transmission of each block of the sequence from a number of predefined levels, and means (46) for activating the acknowledgement control field in the header of the blocks of the sequence in order to request an acknowledgement of blocks from the terminal to which the block is transmitted,
**characterised in that**
the means (46) for activating the acknowledgement control field are intermittent activation means; **in that** the selection means comprise means for selecting a coding scheme; and **in that**
the selection means are set up to select a higher level of protection for the transmission of at least one block of which the header has an activated acknowledgement control field than for the transmission of blocks of which the acknowledgement control field of the header is not activated.

6. The control unit according to Claim 5, wherein the selection means (46) are set up to select a maximum level of protection for the transmission of the block of which the header has an activated acknowledgement control field.

7. The control unit according to Claim 5 or 6, which further comprises means for inhibiting the transmission of the blocks to the terminal (10) outside a window composed of a determined number of blocks and having a position within the sequence determined on the basis of acknowledgement information received from the terminal in response to the blocks of which the header has an activated acknowledgement control field.
